# EUROPEAN PATENT APPLICATION

(11) **EP 2 525 164 A1**
(43) Date of publication of application: **21.11.2012**
(21) Application number: 11166851.3
(22) Date of filing: 20.05.2011
(51) Int. Cl.: F24J 2/52, H01L 31/042

(54) **Support structure for solar panels and the like**

(71) Applicant: Maspi S.r.L., 24030 Terno D'Isola (BG) (IT)
(72) Inventor: Mazzilli, Mario, 24030 Villa D'Adda (Bergamo) (IT)
(74) Representative: Lunati & Mazzoni S.r.L.

(57) **Abstract**

It is provided a support structure (1) for solar panels adapted to rigidly secure at least one solar collector (100) defining a capture surface (100a) to a rest surface (1 a) and comprising, for each solar collector (100), at least two main supports (2) adapted to enclose the solar collector (100) at their inside; at least one horizontal support (3) adapted to be fastened between two main supports (2); each main support (2) comprises an upper element (4) adapted to be secured at a side edge of the solar collector (100) so as to define a fixed angle of inclination between the capture surface (100a) and the rest surface (1a); a lower element (5) adapted to come into contact with the rest surface (1 a); and an intermediate element (6) adapted to be interposed between the upper element (4) and lower element (5), having a tapering outer-section profile and having its greater outer section close to the upper element (4) and its smaller outer section close to the lower element (5).

## Description

The present invention relates to a support structure for solar panels of the type pointed out in the preamble of the first claim.

The invention pertains to a support structure adapted to allow thermal, photovoltaic, hybrid solar panels or any other similar element suitable to enable exploitation of the solar energy to be positioned in an optimal manner. In particular, the bearing structure being the object of the invention is a structure of the fixed type, i.e. a structure that, once the panel has been fastened thereto, does not allow movements of the panel.

It is known that accomplishment of plants adapted to supply clean electric energy, i.e. obtained from alternative energy sources and in particular from the sun, is widely spread. One of the most widespread types of plants is the photovoltaic one converting solar energy into electric energy.

These plants usually consist of a plurality of panels carried in the correct position by a structure provided with supports susceptible of movement, i.e. enabling each photovoltaic panel to be moved relative to the support so as to allow the panel itself to follow the sun during the whole day.

These particular bearing structures adapted to allow movement of the panels are characterised by a great manufacturing complexity due to the presence of articulated and complicated joints and complicated actuating apparatus, which will bring about high purchase costs for the support and great difficulty in fitting out the plant.

For the above reasons, in many cases plants with fixed panels are preferred because, although offering less efficiency, they however have much lower costs as compared with the preceding ones.

These plants with fixed panels usually have a single bearing structure made up of a framework of section members welded together and such made as to adapt each time the structure sizes to the sizes of the plant that is wished to be created.

The known art mentioned above has some important drawbacks.

A first problem is represented once more by the high cost that makes accomplishment of solar plants very expensive, so that spreading of same is limited. This problem, although plants with fixed panels have much lower costs than those with moving panels, is still particularly important. Above all, the high cost results from the fact that each time a photovoltaic plant is wished to be built, it is necessary to make a new structure peculiar to the plant being made which differs from the preceding ones in terms of sizes, arrangement and inclination of the panels.

Another problem resides in the fitting-out complexity of a photovoltaic plant. In particular, this problem is due to the high assembling complexity of the panels and, in detail, to the difficulty encountered in fastening them to the bearing structure.

In addition, this assembling complexity makes it particularly complicated to carry out servicing works on the plant itself and, in particular, on the photovoltaic panels and the bearing structure.

A further problem of plants with fixed panels is represented by the fact that fastening of the bearing structure to the roof is carried out through screws and friction fits and therefore a great number of holes or other types of working are required to be made, so that the roof structure is weakened and above all many problems concerning fluid leakage and sealing are created, which will make waterproofing of the roof very complicated.

This problem is also emphasised by the fact that the bearing structures, due to their shape, are subject to big forces due to the action of the wind, so that a great number of holes is required, which will bring about weakening of the roof.

Said roof weakening is particularly important taking into account the fact that these photovoltaic plants have a very heavy bearing structure.

Finally, said big forces make it necessary to create a particularly strong structure adapted not only to support the panels, but also to resist the action of said forces.

### SUMMARY OF THE INVENTION

Under this situation, the technical task underlying the present invention is to conceive a support structure for solar panels capable of substantially obviating the mentioned drawbacks.

Within the scope of this technical task it is an important aim of the invention to provide a support structure for solar panels enabling an installation to be carried out that does not impair the roof structure.

It is an important objective of the invention to obtain a support structure that is particularly cheap and capable of being easily adapted to any use condition. Another important aim of the invention is to conceive a particularly lightweight structure which, at the same time, is able to support the photovoltaic panels and the loads to which it is submitted.

A further aim of the invention is to create a support structure enabling particularly cheap photovoltaic plants to be made.

The technical task mentioned and the aims specified are achieved by a support structure for solar panels as claimed in the appended Claim 1.

The features and advantages of the invention are hereinafter clarified by the detailed description of a preferred embodiment of the invention, with reference to the accompanying drawings, in which:
**Fig. 1a** is a perspective view of a support structure for solar panels according to the invention in a first variant;
**Fig. 1b** is a perspective view of a support structure for solar panels according to the invention in a second variant;
**Fig. 2a** is a side view of the bearing structure;
**Fig. 2b** shows the side view of Fig. 2a with the bearing structure provided with an additional component;
**Fig. 2c** is a side view of Fig. 2b with the bearing structure provided with another additional component;
**Fig. 3a** is an exploded view of the bearing structure according to the invention in a first variant;
**Fig. 3b** is an exploded view of the bearing structure according to the invention in a second variant;
**Fig. 4a** shows an enlarged view of a portion of the structure; and
**Fig. 4b** shows the portion seen in Fig. 4a in a second configuration.

With reference to the drawings, a support structure for solar panels according to the invention is generally denoted at **1.**

It is adapted to be used for creation of solar plants having solar collectors 100 that are fixed, i.e. cannot be moved relative to a rest surface **1a** and define at least one capture surface **100a,** i.e. a surface adapted to enable the solar energy to be collected and therefore exploited.

Surface 1 a could be, in turn, a rotating or movable surface but it is preferably fixed relative to the ground.

The term "solar collector" identifies a system consisting of one or more solar panels each of which defines a capture surface 100a. The solar collector 100 can therefore comprise at least one thermal solar panel, i.e. a panel adapted to enable the solar energy to be utilised for heating water or other fluid, or at least one photovoltaic solar panel, adapted to enable this energy to be converted into electricity, or other panel adapted to utilise the solar energy.

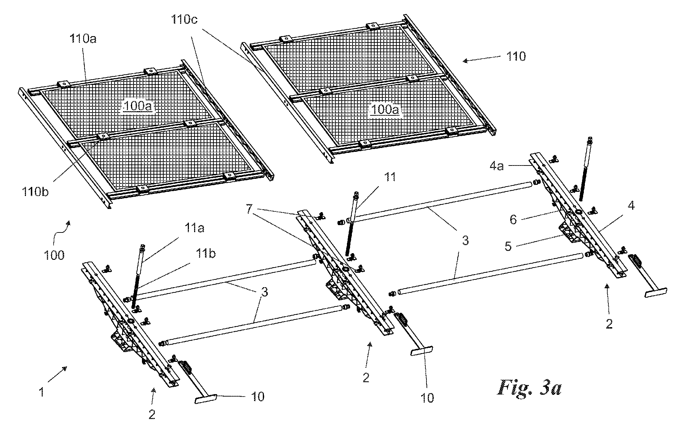

The solar collector 100 can therefore have a single solar panel or, alternatively, a plurality of panels suitably fastened to each other. As shown in Fig. 3a, it can therefore have a framework **110** adapted to fasten the solar panels to each other making the capture surfaces 100a of them substantially lie in a single plane. Framework 110 therefore has one or more section members **110a** on which the solar panels are laid, a plurality of abutment elements **110b** adapted to lock the panels to the section members 110a and crosspieces **110c** adapted to enable each collector 100 to be secured to the bearing structure 1.

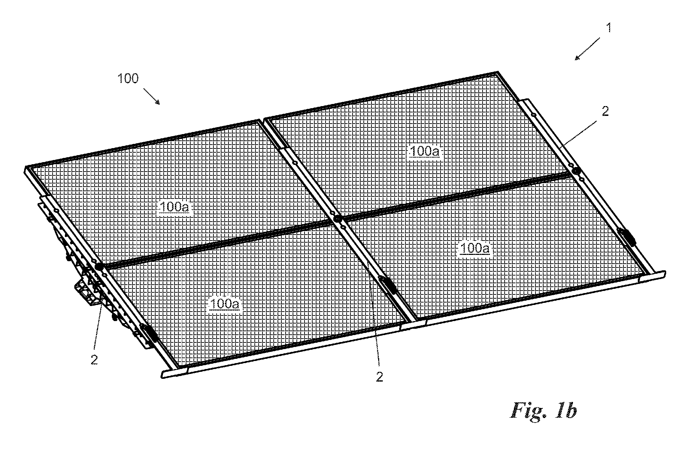

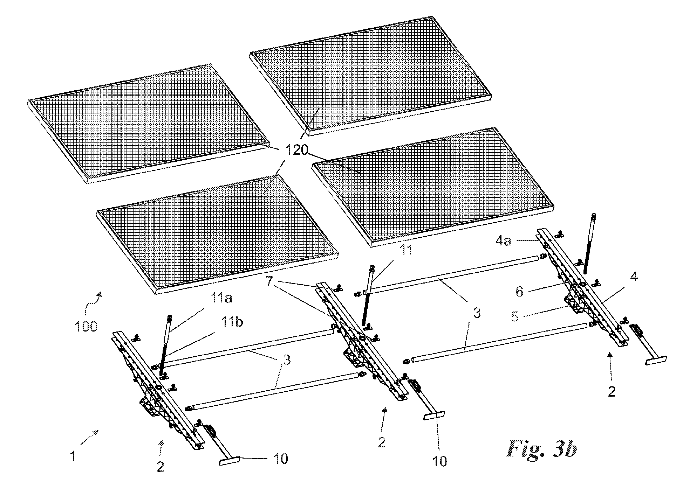

Alternatively, the solar collector 100 comprises solar panels **120** (Figs. 1b and 3b) already provided with a framework of their own, adapted to be positioned on the bearing structures 1.

The bearing structure 1 for each solar collector 100 comprises at least two main supports 2 adapted to enclose the solar collector 100 inside them, and at least one horizontal support **3** adapted to be placed between two of said at least two main supports.

The main supports 2 are made of a polymeric material and preferably of a thermosetting polymeric material, such as resin or the like.

Each main support 2 comprises an upper element **4** adapted to secure a side edge of at least one solar collector 100 to the main support 2 defining a fixed angle of inclination between the capture surface 110a and the rest surface 1 a; a lower element **5** substantially consisting of a single block adapted to come into contact with the rest surface 1a; and an intermediate element **6** adapted to be interposed between the upper element 4 and lower element 5. In particular, the expression "fixed angle of inclination" means that the solar collector 100, once secured to the bearing structure 1, cannot be such moved as to vary this angle of inclination. The upper element 4 defines at least one insertion or slide guide **4a** adapted to enable the solar collector 100 to be inserted into the upper element 4 through a substantially rectilinear movement. The insertion guide 4a therefore has a rectilinear extension direction that is inclined to the rest surface 1a by an angle substantially coincident with the fixed angle of inclination, so as to enable the solar collector 100 to be moved thus varying the distance between collector 100 and the rest surface 1 a, as described in the following.

Preferably, the upper element 4, as shown in Figs. 3a and 3b, has two insertion guides 4a placed on opposite sides relative to each other, so that two solar collectors 100 can be fastened to each main support 2.

The bearing structure 1, at each insertion guide 4a has constraint means 7 adapted to rigidly fasten the solar collector 100 to the upper element 4, at a guide 4a.

In particular, the constraint means 7 consists of screws, bolts, pressers or other similar means adapted to enable collector 100 to be secured to the main support 2. Preferably, the constraint means 7 consists of pressers, i.e. elements that can be moved, through a screw for example, in a direction substantially perpendicular to the capture surface 100a so as to lock collector 100 to the insertion guide 4a and therefore fasten the solar collector 100 to the main support 2.

Below the upper element 4 and, in particular, between the upper element 4 and lower element 5 of the main support 2 there is the intermediate element 6 that is suitably shaped so as to enable almost the whole of the forces acting on the upper element 4 to be discharged onto the lower element 5. To this aim, the intermediate element 6 has a profile with a tapering outer section, i.e. the section of the intermediate element 6 defined by the overall dimensions related to such a section becomes increasingly smaller. In particular, the intermediate element 6 has its greater outer section placed close to the upper element 4 and its smaller outer section placed close to the lower element 5.

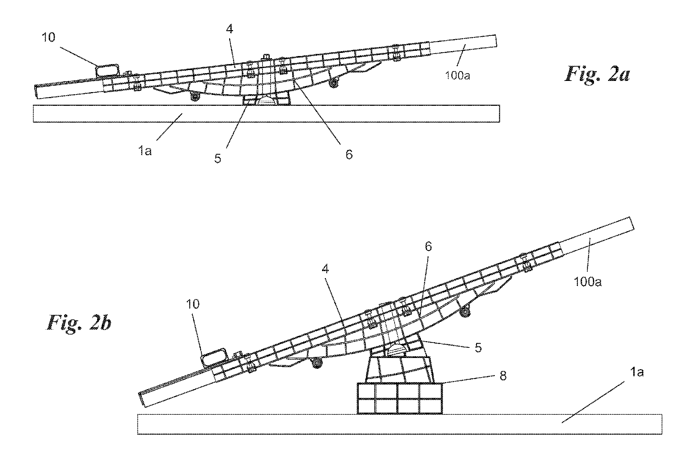

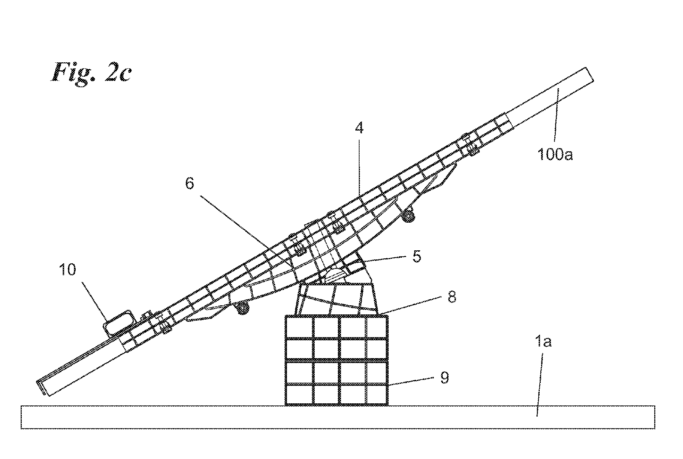

The intermediate element 6 can therefore consist of a series of section members spread apart from each other or, preferably, by a single body substantially having an arched profile, as shown in Figs. 2a-2c.

For correct positioning of the solar collector 100, the main support 2 has such a size that it defines a fixed first angle of inclination a of substantially 7° between the capture surface 100a and the rest surface 1 a.

Alternatively, should a different fixed angle of inclination be required, the main support 2 may comprise a first base block **8** adapted to be disposed between the lower element 5 and the rest surface 1 a so as to define a fixed second angle of inclination β substantially of 20° between the capture surface 100a and the rest surface 1 a.

Should a further different angle of inclination be required, the main support 2 could contemplate, in addition to the aforesaid first base block 8, a second base block **9** interposed between said first block 8 and said rest surface 1 a so that there will be a fixed third angle of inclination γ approximately of 30° between the two surfaces 100a and 1 a.

Alternatively, the first base block 8 and second base block 9 can consist of a single block.

Furthermore, the size of the components constituting the main support 2 is of such a nature as to define a minimum distance between the solar collector 100 and the rest surface 1a, which distance is less than 50 mm and preferably less than 35 mm. In detail, this minimum distance is calculated along the normal to the rest surface 1 a and identifies the shortest distance between such a surface 1 a and the solar collector 100.

For obtaining said minimum distance, the main support 2, at least during fitting-out of structure 1, can have a template **10** or other similar instrument adapted to enable a stop point to be defined when the solar collector 100 is inserted in the upper element 4 and, therefore, the correct position for location to be defined in a unique manner. In particular, this template 10 consists for example of an L-shaped plate so that it is fastened to the upper element 3 at the upper part thereof and has an abutment surface at the slide guides 4a.

Fastening of the bearing structure 1 to the rest surface 1 a is exclusively obtained at the lower element 5 through an anchoring unit. In particular, the anchoring unit can be identified as a single means adapted to perform said fastening function such as a layer of glue or a tie-rod **11.**

For instance, should the anchoring unit consist of a single tie-rod, it will comprise two components, one of them rigidly connected to the main support 2 and the other to the rest surface 1a; said components can be connected to each other through a threaded coupling for example. In particular, as shown in Figs. 3a and 3b, the tie-rod **11** has a first component **11a** with an outer thread for engagement with the rest surface 1 a and a second component **11b** with an inner thread for engagement with the first component 11a.

Alternatively, the anchoring unit may consist of a layer of sticky material suitable to enable the main support 2 to be steadily fastened to surface 1a.

Under each solar collector 100 the bearing structure 1 has one or more horizontal supports 3 that can consist of section members and are fastened to the two main supports 2 carrying such a solar collector 100.

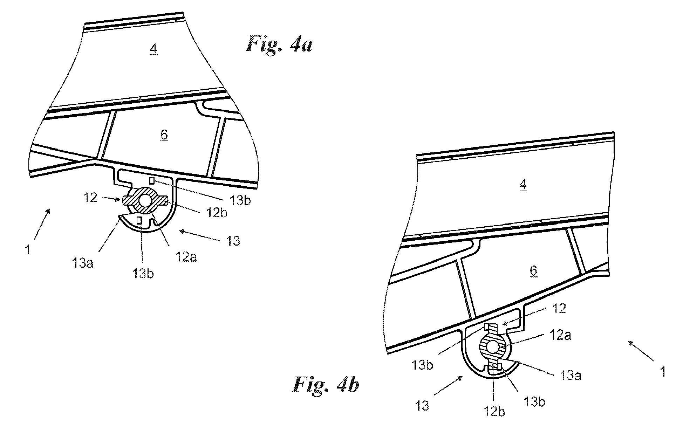

For mutually joining the two supports 2 and 3, the bearing structure 1 comprises quick hooking means adapted to enable the horizontal support to be quickly secured to a main support 2. In particular, this quick hooking means as shown in Figs. 4a and 4b, comprises a fitting element **12** substantially integral with the horizontal support 3 and adapted to be inserted in a suitable housing **13** secured to the main support 2. In particular, housing 13 can be fastened to the main support 2 at the intermediate element 6.

The fitting element 12 substantially has a central body **12a** adapted to be inserted into the housing 13 and one or more engagement pawls **12b** for locking the fitting element 12 to the desired position, which pawls are formed on the central body 12a.

On the contrary, housing 13 substantially consists of a small plate having a cavity **13a** for housing the central body 12a, a deformable shoulder **13b** adapted to be deformed, as better described in the following, by rotation of the engagement pawl 12b in a given rotation direction of said pawl 12b, and an undeformable shoulder **13c** adapted to enable pawl 12b to be entrapped between the two shoulders 13b and 13c.

In particular, the deformable shoulder 13b can substantially have a profile in the form of a right-angled triangle with a cathetus placed close to cavity 13a and the other cathetus facing the undeformable shoulder 13c. Due to this arrangement, when the fitting element 12 is inserted in cavity 13a and starts rotating (Fig. 4a), pawl 12b meets the deformable shoulder 13b, travels over it along its hypotenuse and deforms it and, once shoulder 13b has been overridden, remains substantially entrapped between the deformable shoulder 13b having taken the starting shape again, and the undeformable shoulder 13c (Fig. 4b).

Installation of a support structure for solar panels described above as regards structure and therefore installation of a photovoltaic plant, is the following.

At the beginning an operator prepares the solar collectors 100 fastening one or more solar panels to the framework 110 or 120 and, at the same time, secures a plurality of main supports 2 to the rest surface 1a through an appropriate anchoring unit for each of the vertical supports.

In particular, should the anchoring unit consist of a glue layer, each main support 2 is secured to the rest surface 1 a through laying of such a layer of sticky material.

Alternatively, i.e. should the anchoring unit contemplate the presence of a tie-rod 11 or other similar solution, a housing hole is drilled for the first component 11a, the main support 2 is positioned and the second component 11 b is caused to be placed close to the first component 11 a and then the two components 11a and 11 b are mutually tightened so that the main support 2 is fastened to the rest surface 1 a.

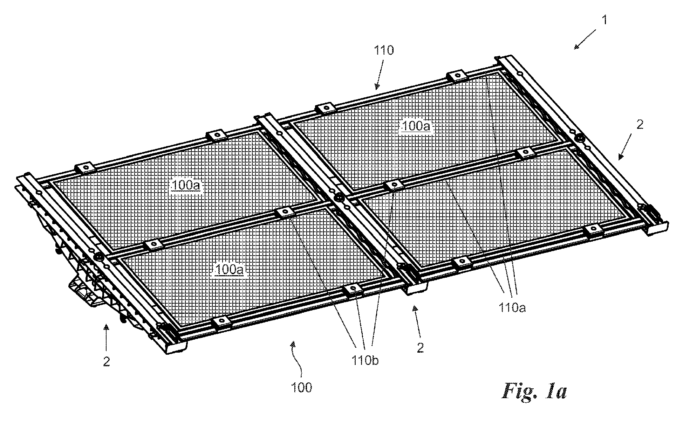

Once the main supports 2 are fastened to the rest surface 1a, the bearing structure 1 is completed by securing the horizontal supports 3 to the main supports 2 through the quick hooking means. In particular, as shown in Figs. 1 and 3, each main support 2 is fastened to the adjacent ones by means of two horizontal supports 3.

Fastening between supports 2 and 3 is obtained by inserting the fitting element 12, and more particularly the central body 12a into the cavity 13a belonging to housing 13 (Fig. 4a), the vertical support 3 is rotated and then the fitting element 12 is rotated relative to housing 13. This rotation makes each engagement pawl 12b come into contact with a deformable shoulder 13b and deform it so as to enable passage of the pawl that will thus be disposed between the two shoulders 13b and 13c (Fig. 4b).

Once positioning of the horizontal supports 3 has come to an end, the bearing structure 1 is substantially terminated and the solar plant can be completed through positioning of the solar collectors 100.

At the beginning, one or more templates 10 are fastened to the upper elements 4 so as to enable positioning to be defined in a unique manner, and in detail the minimum distance of collectors 100 relative to the rest surface 1.

Subsequently, the solar collector 100 is inserted between two insertion guides 4a of two adjacent main supports 2 bringing collector 100 into contact with template 10 and then the solar collector 100 is tightened to the main support 2 and, more specifically, to the upper element 4 through the constraint means 7.

At this point, the solar collector 100 is positioned in a correct manner and is rigidly connected to the upper elements by the constraint means 7; therefore removal of templates 10 is allowed, so that the installation can be finished.

The invention enables achievement of important advantages.

In fact, the bearing structure 1 does not require, for installation, drilling of a great number of holes or other working operations that can in some way spoil and weaken the roof strength or the strength of the building construction identifying the rest surface 1a onto which the bearing structure 1 is fastened.

This advantage has been substantially obtained due to the particular fastening means and the innovative main support 2. In particular, fastening of the main support 2 being made by a single anchoring unit (a tie-rod 12 or a glue layer, for example) it does not interfere or interferes to a minimum extent with the building construction.

In addition, manufacture of the main support 2 using a polymeric material allows a particularly lightweight bearing structure 1 to be obtained, which does not greatly increases the forces acting on the building construction.

Manufacture of the main support 2 using a polymeric material and the particular fastening of same to the rest surface 1a have been made possible mostly due to the innovative shape of the vertical support itself.

In particular, this advantage is obtained due to the particular shape of the intermediate element 6 enabling all loads acting on the bearing structure 1 to be concentrated on the lower element 5. Therefore, the shape of the intermediate element 6 allows all the concerned forces to be discharged on the rest surface 1a exclusively through the lower element 5; therefore structure 1 can be made steady, exclusively by fastening with use of the anchoring unit alone. Furthermore, said advantages are also due to the presence of the horizontal supports 3 connecting two main supports 2 to each other and giving the bearing structure 1 a high balance/steadiness degree as they enable the air flow striking on collectors 100 to be broken. Otherwise, this air flow could increase the forces acting on the structure and therefore limit the lifetime of the structure itself.

In particular, due to the presence of the horizontal supports 3 breaking said striking air flow and therefore limiting the forces acting on structure 1, it is possible to fasten the main supports 2 through the locking units alone, making it useless to employ a plurality of screws or other complicated means.

Another advantage of the bearing structure 1, as it appears from the above described operations for installation, resides in a simple fitting-out and installation of the structure itself.

From the above description it is also possible to understand that structure 1 allows a precise positioning of the solar collectors 100 to be carried out in a quick and easy manner.

A further advantage is represented by the possibility of adapting structure 1 to every use condition. This advantage is substantially achieved due to the fact that, through use of the base blocks 8 and 9 it is possible to adapt the inclination of the solar collector 100 and therefore of the capture surface 100a in a simple and quick manner to the peculiar requirements of the place where structure 1 has to be positioned.

Another important advantage is the reduced cost of the bearing structure 1 enabling to make photovoltaic plants without huge investments being necessary.

It is also to be pointed out that the intervention on the bearing structure 1 and solar collectors 100 for carrying out servicing operations is facilitated due to the easy mutual movements between the different components forming the plant.

## Claims

1. A support structure (1) for solar panels of the type adapted to secure at least one solar collector (100) to a rest surface (1 a), which solar collector (100) defines a capture surface (100a) inclined to said rest surface (1a) by a fixed angle of inclination and **characterised in that** for each of said at least one solar collector (100), it comprises at least two main supports (2) that are adapted to enclose said solar collector (100) at their inside; at least one horizontal support (3) adapted to be fastened between two of said at least two main supports (2); and **in that** each of said at least two main supports (2) comprises an upper element (4) adapted to be secured at a side edge of one said solar collector (100) so as to define a fixed angle of inclination; a lower element (5) adapted to come into contact with said rest surface (1 a); and an intermediate element (6) adapted to be interposed between said upper element (4) and lower element (5), having a tapering outer-section profile and having its greater outer section close to said upper element (4) and its smaller outer section close to said lower element (5).

2. A support structure (1) as claimed in claim 1, wherein said at least two main supports (2) are made of polymeric material.

3. A support structure (1) as claimed in one or more of the preceding claims, wherein said upper element (4) defines at least one insertion guide (4a) adapted to enable said solar collector (100) to be inserted into said upper element (4) by means of a substantially rectilinear movement.

4. A support structure (1) as claimed in the preceding claim, wherein said at least one insertion guide (4a) has a rectilinear extension direction that is inclined to the rest surface (1 a) by an angle substantially coincident with the fixed angle of inclination.

5. A support structure (1) as claimed in one or more of claims 3-4, wherein said upper element (4) has two of said insertion guides (4a) facing each other on opposite sides.

6. A support structure (1) as claimed in one or more of claims 3-5, comprising constraint means (7) adapted to fasten said solar collector (100) to said upper element (4) in a rigid and steady manner at one of said insertion guides (4a).

7. A support structure (1) as claimed in the preceding claim, wherein said constraint means (7) comprises pressers adapted to rigidly fasten said solar collector (100) to said upper element (4).

8. A support structure (1) as claimed in one or more of the preceding claims, comprising quick-hooking means to enable said at least one horizontal support (3) to be quickly secured to said two main supports (2).

9. A support structure (1) as claimed in one or more of the preceding claims, wherein said main support (2) is adapted to define a minimum distance between said solar collector (100) and said rest surface (1 a), which distance is smaller than 50 mm.

10. A support structure (1) as claimed in the preceding claim, wherein said minimum distance is less than 35 mm.

11. A support structure (1) as claimed in the preceding claim, comprising a template (10) adapted to be secured to said upper element (4) so as to define a shoulder for positioning said solar collector (100) to said minimum distance from said rest surface (1 a).

12. A support structure (1) as claimed in one or more of the preceding claims, wherein said main support (2) is adapted to define a fixed first angle of inclination (α) substantially of 7°.

13. A support structure (1) as claimed in one or more of the preceding claims, wherein said main support (2) comprises a first base block (8) adapted to be disposed between said lower element (5) and said rest surface (1 a) so as to define a fixed second angle of inclination (β) substantially of 20°.

14. A support structure (1) as claimed in the preceding claim, wherein said main support (2) comprises a second base block (9) adapted to be disposed between said first base block (8) and said rest surface (1 a) so as to define a fixed third angle of inclination (γ) substantially of 30°.

15. A support structure (1) as claimed in the preceding claim, wherein said first base block (8) and said second base block (9) are of one piece construction.
